# EUROPEAN PATENT APPLICATION

(11) **EP 4 592 251 A1**
(43) Date of publication of application: **30.07.2025**
(21) Application number: 24305130.7
(22) Date of filing: 23.01.2024
(51) Int. Cl.: C02F 1/42, H01M 8/04029, H01M 8/04044, B01J 47/026, B01J 41/05, B01J 39/05, B01J 47/04, C02F 103/02

(54) **ION EXCHANGE FILTERS USEFUL FOR ELECTROCHEMICAL SYSTEMS**

(71) Applicant: DDP Specialty Electronic Materials US 8, LLC, Wilmington, DE 19805 (US); DDP Specialty Electronic Materials US, LLC, Wilmington, DE 19805 (US)
(72) Inventor: Chretien, David, 02301 CHAUNY (FR); Deetz, Martin, WILMINGTON, 19803 (US); Slagt, Marc, 3313 DORDRECHT (NL); Roth, Matt, WILMINGTON, 19803 (US)
(74) Representative: Regimbeau

(57) **Abstract**

Provided herein are ion exchange filters comprising mixed beds of strong acid cation resins in H form, strong base anion resins in OH form and strong base anion resins in HCOs form, in specific proportions. The mixed resin beds provide more thermal stability and lower electrical conductivity compared to single resin beds. Further provided herein is a method of purifying an aqueous fluid, for example a stream in a fuel cell, a battery, a battery charger or an electrolyzer, by contact with the mixed resin beds of the ion exchange filters described herein.

## Description

### Field of the Invention

The present invention relates to the field of ion exchange filters, in particular ion exchange filters having mixed resin beds, and to the use of these ion exchange filters to purify aqueous fluids, for example streams in fuel cells, batteries or electrolyzers.

### Background of the Invention

Several patents, patent applications and publications are cited in this description in order to more fully describe the state of the art to which this invention pertains. The entire disclosure of each of these patents, patent applications, and publications is incorporated by reference herein.

Electrochemical systems involve the conversion of chemical energy into electrical energy or vice versa through electrochemical reactions. Examples of electrochemical systems include batteries, battery chargers, fuel cells, and electrolyzers. These systems are widely used in various applications, such as in portable electronic devices, electric vehicles, and renewable energy technologies.

Batteries convert chemical energy into electrical energy through a process of electrochemical reactions between two or more electrodes and an electrolyte. Inside the battery, chemical reactions occur to produce a flow of electrons from the negative electrode (anode) to the positive electrode (cathode). This flow of electrons creates a current that can be used to power an external device. The electrolyte acts as a medium for the transfer of ions between the anode and cathode. As the battery discharges, the chemical reactions that produce the current begin to slow down, and the battery eventually runs out of charge. The battery can be recharged by a charger that applies an external electrical current that forces the electrochemical reactions to proceed in the opposite direction.

Coolants are needed in batteries and chargers to help manage their temperature during charging and discharging. Batteries and chargers can generate excessive heat during operation, particularly if they are being discharged or charged rapidly. This heat can lead to a degradation of the battery's or charger's performance and lifespan, and in extreme cases can even cause safety issues such as thermal runaway or explosions. Coolants are used to help dissipate heat from the battery or charger by absorbing and transferring it away from the internal elements where energy is dissipated as heat rather than electrical potential, for example, battery cells or plates. Thus, coolants help to maintain the battery's or charger's operating temperature within a safe range. In addition, coolants can also help to prevent freezing or boiling of the electrolyte in extreme temperature environments.

More specifically, electric car chargers convert alternate current (AC) to direct current (DC), which is compatible with the electric car battery. This conversion generates heat. For example, a typical 22 kW AC charger provides enough charge in 120 minutes to provide an additional 200 km of vehicle range. To reduce the 200 km range charge time to only 16 minutes, a 150 kW DC charging station is required. At this level of power, and to avoid overheating, an effective and improved thermal management is needed as the temperature can increase to more than 270°C during a 10-minute fast charge, according to a report from the U.S. Department of Energy. See, for example, Enabling Fast Charging: A Technology Gap Assessment, published by the Office of Energy Efficiency and Renewable Energy of the U.S. Department of Energy, found at https://www.energy.gov/sites/prod/files/2017/10/f38/ XFC%20Technoloqv%20Gap%20Assessment%20Report FINAL 10202017.pdf

Traditionally, air cooling has been the preferred solution, but liquid cooling has been shown to be the most effective. The heat capacity of water is also 3,500 times greater than that of air. This is one reason why water is up to 10 times more effective at dissipating heat from the source. Furthermore, liquid cooling enables working with pre-filled systems, which will facilitate the maintenance, expedite any necessary replacements, authorize quick initial installation, and expedite upgrades. Accordingly, liquid cooling can be found in many application areas, such as, without limitation, thermal battery pack, vehicle inverter, and charging station power electronics.

The coolant used for liquid cooling of the fast charger is typically a water/glycol mixture. The use of water/glycol mixtures prevents the coolant from freezing and increases its boiling point.

It is apparent that technical malfunctions in the battery charger can create additional heat. For example, if the voltage is not stable then a charger that is programmed to maintain a constant charging rate will generate excess heat. Moreover, impurities will elute from plastic surfaces used in the cooling system as well as metals from metal parts such as coolers. The non-conductive coolant itself is subject to thermal degradation, releasing conductive components into the cooling loop. Glycolic and formic acid are typical examples formed in the degradation mechanism of ethylene glycol ("monoethylene glycol" or "MEG") and lactic and acetic acid are formed in the degradation mechanisms of propylene glycol ("PG").

See, for example, AN INVESTIGATION OF THE DEGRADATION OF AQUEOUS ETHYLENE GLYCOL AND PROPYLENE GLYCOL SOLUTIONS USING ION CHROMATOGRAPHY Walter J. ROSSITER, Jr., McClure GODETTE, Paul W. BROWN and Kevin G. GALUK Building Materials Division, Center for Building Technology, National Bureau of Standards, Gaithersburg, MD 10899, USA; Received 17 May 1984; revised 30 August 1984, available online 5 March 2003; Solar Energy Materials, Volume 11, Issues 5-6, January-February 1985, Pages 455-467 accessible at https://doi.org/10.1016/0165-1633(85)90016-4.

Fuel cell systems perform electrochemical oxidation of a fuel e.g. hydrogen with oxygen resulting in electrical energy and water. The system can include several subsystems, for example:
- Subsystem for managing the flow of hydrogen and oxygen: This would include gas compression and control systems to deliver the gases to the subsystem for electrical energy generation. In some cases, hydrogen is generated on site using gas reformers that extract hydrogen from hydrocarbons like natural gas. Oxygen can be supplied directly from the air.
- Subsystem for electrical energy generation: this would commonly be in the form of a fuel cell stack which consists of multiple individual fuel cells. Each cell contains an anode and cathode separated by an electrolyte and a proton-selective membrane. When hydrogen gas contacts the anode, it splits into protons (H⁺ ions) and electrons. The protons pass through the electrolyte and the proton selective membrane to the cathode, where they react with oxygen and electrons from the anode to generate electricity, heat and water.
- Subsystem for managing the flow of water: water is generated as a product of electrochemical oxidation of hydrogen in a fuel cell. This water may be released as vapor from the fuel cell stack - or condensed and reused in the system as a coolant or humidifier to the incoming air.

Liquid coolant subsystem: This usually includes:
∘ a means of exchanging heat via a liquid coolant: Fuel cells produce heat as they perform electrochemical oxidation. Heat typically improves the efficiency of the fuel cells, and this may be regarded as a beneficial way to operate. However, heat can degrade components such as the ion exchange resin, electrolysis membrane and other materials of construction. Heat management is crucial to ensure the fuel cell performance and lifetime. Thus, a cooling system is necessary to preserve and extend the operation of the electrochemical system. Cooling systems applicable to the present invention are not particularly limited and typically comprise a coolant re-circulating within pipes or tubing between a remote heat exchanger and the fuel cell. The heat exchanger may be in fluid communication with a radiator, heat regulators, and/or by-pass means for selectively filtering circulating coolant. The coolant is not particularly limited but typically comprises low conductivity fluids such as purified water or an aqueous alkylene glycol mixture. Various additives may be included in the coolant. Other designs and coolants are well known and may be used, including those described in EP1791206.
∘ a means of treating said liquid coolant: during the circulation of the cooling liquid, ions from metal and organics from plastic surfaces will diffuse into the cooling liquid while at the same time the glycol will thermally degrade into organic acids like glycolic and formic acids. This results in a progressive increase of conductivity in the coolant liquid. This conductance imposes safety and reliability risks and therefor need to be removed. This treatment is often performed using ion exchange resins.

Electrolyzers perform electrochemical reduction of water resulting in hydrogen and oxygen. The system can include several subsystems, for example:
- Subsystem for managing the flow of water: a system of pumps and water quality control is necessary to provide a reliable supply of water to the electrolyzer.
- Subsystem for electrical energy consumption: this would commonly be in the form of an electrolysis cell which contains an anode and cathode separated by an electrolyte and an ion-selective membrane, such as a proton exchange membrane (PEM) for protons. In the case of a proton selective membrane, when water contacts the anode, it splits into hydrogen ions (H⁺) and oxygen gas. The hydrogen ions travel through the electrolyte and proton-selective membrane to the cathode, where it converts to hydrogen gas. The oxygen gas is collected at the anode.

- Subsystem for managing the flow of hydrogen and oxygen: This would include gas separation, purification, and compression as well as control systems to deliver the gases to their destinations.
- Liquid coolant subsystem: This usually includes:
   ∘ a means of exchanging heat via a liquid coolant: Heat is generated in an electrolyzer due to the resistance of the electrolyte solution to the passage of electricity. Heat typically improves the efficiency of the electrolysis process and this may be regarded as a beneficial way to operate. However, heat can degrade components such as the ion exchange resin, electrolysis membrane and other materials of construction. Thus, a cooling system is necessary to preserve and extend the operation of the electrochemical system.
   ∘ Some heat is absorbed by the water circulating through the electrolyzer. Not all the water fed to the electrolyzer is converted to hydrogen and oxygen. A portion of the unconverted water is treated with ion exchange resins for the removal of contaminants. The converted water is replenished by a makeup water stream.
   ∘ Liquid or air cooling can be additionally employed. Cooling systems applicable to the present invention are not particularly limited and typically comprise a coolant re-circulating within pipes or tubing between a remote heat exchanger and the electrolyzer. The heat exchanger may be in fluid communication with a radiator, heat regulators, and/or by-pass means for selectively filtering circulating coolant. The coolant system or loop, which is distinct from the loops that contain the electrolysis feed and product streams, is not particularly limited but typically comprises low conductivity fluids such as purified water. Various additives may be included in the coolant. Other designs and coolants are well known and may be used, including several that are similar to those described in EP1791206 with respect to fuel cells. Water is commonly used to transfer the heat from electrolyzers to one or more coolers.
   ∘ a means of treating the feed water recirculating through the electrolyzer or the coolant stream, which may become contaminated by ions from metal surfaces, organics from plastic surfaces, microbes and other chemicals. This contamination can cause corrosion, lower heat transfer efficiency, fouling, scaling and safety hazards. This treatment is often performed using ion exchange resins.

In all of these electrochemical systems, however, coolant that includes an impurity can cause a short circuit by conductance. The short circuit may merely cause an inefficiency, or it may cause a complete failure of the system. Dangerous electrical fires may also result from short circuits. Alternatively, the impurities can foul the anode, cathode, or membrane, leading to inefficient operation and shortened lifetime. It is therefore apparent that coolant purification is an important aspect of many electrochemical systems.

One of the common methods to remove contaminants from coolant streams is ion exchange. Several publications describe the use of ion exchange resins to remove debris and contaminants from coolant streams. See, for example, US8808931; US7261816; US6673482; US6663993 and EP1791206. In particular, US8808931 describes the use of strong base anion (SBA) exchange resins in HCOs form to treat fuel cell coolant. Using the HCOs form anion increased the thermal stability of the coolant, compared to coolant treated with the typically used OH form anion. However, using the HCOs form SBA in the fuel cell coolant also increased the conductivity of the coolant. As discussed above, increased conductivity is undesired as it can lead to short circuits, other unsafe circumstances and fuel cell shut down.

US11165074 describes the use of a combination of a strong acid cation, strong basic anion and a weak basic anion exchange resins to treat a coolant stream. It is postulated that weak base anion resins may have higher thermal stability than strongly basic anion resins. However, there are limitations associated with weak base anion resins. In the coolant loops for fuel cells and EV batteries, for example, the main contaminant (a weakly associated organic acid, mainly glycolic acid) is related to the thermal degradation of glycol. A weak base anion resin containing secondary or tertiary amines would not be able to remove weakly acidic ions such as glycolic acid having a pKa of 3.83 from the water effectively using ion exchange at near neutral or alkaline pH. Specifically, the glycolic acid and its derivative impurities are not significantly present in the free acidic form as the pH exceeds their pKa value. The conjugate bases of the glycolic acid and the derivative acids, however, cannot protonate the secondary or tertiary amine to allow the adsorption of the glycolic acid and other acid impurities to the weak base resin. Thus, the glycolic acid and related impurities will not be removed from the coolant stream by a weak base anion resin.

Consequently, there remains a need for ion exchange filters comprising resins that have improved thermal stability and lower electrical conductivity, and that produce aqueous streams of superior purity for use in a variety of electrochemical systems.

### Brief Description of the Invention

Accordingly, provided herein are ion exchange filters having mixed beds of strong acid cation resins in H form together with strong base anion resins in OH form, strong base anion resins in HCOs form, or a combination of both of these types of strong base anion resins, in specific proportions. Further provided are methods for treating coolant water streams, for example coolant water streams from electrochemical systems, using the ion exchange filters described herein.

### Brief Description of the Drawings

- Fig. 1: is a graph of conductivity vs. total capacity loaded, showing conductivity trends in the product stream from various mixed beds used to treat a contaminated coolant stream.
- Fig. 2: is a graph of tolytriazole retention vs. time for various mixed beds.

### Detailed Description of the Invention

Mixed bed resin cartridges are commonly used for the treatment of coolant streams. The mixed bed commonly includes a cation resin in H form and an anion resin in OH form.

The resin bead size is not particularly limited and can be selected based upon the operating conditions. Bead diameters of preferred anion exchange resins are from about 300 to 1000 microns. While not required, uniform particle size (UPS) resins may be used, or mixtures of beads sizes may be used.

The high temperature in the cooling circuits of electrochemical systems (60 - 105 °C) will cause thermal degradation of the anion functionality, shortening the resin lifetime. To minimize the effects of the thermal degradation process, the HCOs form anion resin can be used. However, when the mixed bed with the strong acid cation in H form and strong base anion in HCOs form is used in the coolant loop, the HCOs equilibrium causes the conductivity baseline to shift from < 0.1 uS/cm to the range 1 - 5 uS/cm, which is undesirable.

It has now surprisingly been found that an ion exchange filter comprising a mixed bed addressed the thermal stability and conductivity concerns, while maintaining the required high standards of water purity for use in electrochemical systems. In general, water having a resistivity greater than or equal to 12, 15, 17, or 19 MOhm is considered to meet this standard. The mixed bed described comprises a strong acid cation resin in H form together with a strong base anion resin in OH form, a strong base anion resin in HCOs form, or a combination of both of these types of strong base anion resins, in specific proportions.

Suitable strong acid and strong base ion exchange resins for use in the present invention and methods of synthesizing the resins are described in detail in U.S. Pat. Nos. 8,808,931, issued to Golz et al.; 6,784,213, issued to Rohrbach et al.; and references cited in these patents. In addition, suitable acid and base resins are commercially available, for example from DuPont de Nemours, Inc., of Wilmington, DE (hereinafter "DuPont"). Moreover, those of skill in the art are familiar with the definitions of various terms used herein to describe ion exchange resins and uses for the resins, for example "make-up water", "Type I resins," "Type II resins," "gel resins," and the like. These terms are also defined and used in Product Data Sheets and other literature that is made publicly available by manufacturers of ion exchange resins. See, for example, https://www.dupont.com/water/technologies/ion-exchange-ix.html.

Preferably, the strong acid ion exchange resins used herein are suitable for use in industrial utility water make-up applications, in condensate polishing applications, in 18MOhm water production for semi conductor industry, or in a combination of two or more of these applications. Also preferably, the strong acid cation resin is characterized by one or more of the following properties: it is a gel-type resin; it is a cross-linked copolymer of styrene and divinyl benzene; it is a sulfonated polymer; it is in protonated (H) form; it has a uniform particle size or a gaussian particle size distribution; and it has a capacity of about 1.0 to about 3.5, more preferably about 1.5 to about 3, still more preferably about 1.8 to about 2.5 eq/l in H form.

Preferably, the strong base ion exchange resins used herein are also suitable for use in industrial utility water make-up applications, in condensate polishing applications, in 18MOhm water production for semi conductor industry, or in a combination of two or more of these applications. Also preferably, the strong base cation resin is characterized by one or more of the following properties: it is a Type I resin; it is a gel-type resin; it is a cross-linked copolymer of styrene and divinyl benzene; it is in OH or HCOs form; it has a uniform particle size or a gaussian particle size distribution; and it has a capacity of about 0.6 to about 1.8, more preferably about 0.8 to about 1.6, still more preferably about 1.0 to about 1.4 eq/l in OH form.

The mixed beds described herein include a strong acid cation resin (SAC) in H form and a strong base anion (SBA) in OH form or in OH and HCOs forms. Specifically, when the electrochemical system is a fuel cell, a battery, or a battery charger, the mixed bed comprises:
a) a strong acid cation resin in H form;
b) a strong base anion resin in OH form; and
c) a strong base anion resin in HCOs form.

When the electrochemical system is an electrolyzer, however, the mixed bed comprises:
a) a strong acid cation resin in H form;
b) a strong base anion resin in OH form; and optionally
c) a strong base anion resin in HCOs form.

The mixed bed is preferably anion dominated. Stated alternatively, in a given volume of the mixed bed resin, the sum of the volumes of the strong base anion resins in OH and HCOs form is greater than or equal to the volume of the strong acid cation resin in H form. More preferably, the volume of the cation resin is greater than 7.5 vol% and less than 37.7 vol%, or greater than 10.3 vol% and less than 30.8 vol%, based on the total volume of the mixed bed. Complementarily, the volume of the anion resins(s) is more preferably greater than 62.3 vol% and less than 92.6 vol%, or greater than 69.2 vol% and less than 89.7 vol%, based on the total volume of the mixed bed. The sum of the volume percentages of the resins in the mixed bed is 100 vol%. The term "complementary", as used herein alone or in derived form, such as "complementarily", refers to percentages having a sum of 100%, such as, for example, 30.8% and 79.2%.

Suitable designs for ion exchange cartridges used to purify a fuel cell coolant stream are described in U.S. Pat. No. 8,808,931. Similar design principles can be used to adapt this system for use to purify the coolant stream of other electrochemical systems, for example batteries, battery chargers, and electrolysis devices.

Suitable coolants for use in the electrochemical systems described herein are well known in the art. Briefly, however, coolants generally comprise water, one or more glycols, or a combination of water and one or more glycols. Suitable glycols include alkylene glycols. The alkylene groups may be linear or branched. Preferred alkylene groups include 2 to 10 carbon atoms, more preferably 2 to 4, still more preferably 2 to 3 carbon atoms.

In addition, suitable coolants include a number of additives and stabilizers that reduce or prevent thermal or oxidative degradation of the glycols. In general, additive packages are held as the trade secrets of the coolant manufacturers. Nevertheless, the coolant may comprise one or more a thermal stabilizer and a corrosion inhibitor, for example. The additive packages are typically divided into three groups, IAT (inorganic additive technology), OAT (organic additive technology), and HOAT (hybrid OAT). The OAT and HOAT types have the lowest conductivity and are mostly used for fuel cells and electric vehicles. Glycol itself is colorless, but for the purpose of recognizing the liquid and for leak detection, it may be colored with a dye such as a rhodamine. Thermal stabilizers are often described as silica based, and antifoam additives as silicones or poly glycols. Corrosion inhibitors can be azoles, carboxylates and triazoles.

Suitable additives and stabilizers and suitable amounts of these additives and stabilizers are known in the art. See, for example, the Kirk-Othmer Encyclopedia of Chemical Technology and PCT Intl. Appln. Publn. No. WO2017080542. Briefly, however, the total amount of additives and stabilizers in the coolant is preferably less than 5 wt%, less than 3 wt%, less than 2 wt%, or less than 1 wt%, based on the total weight of the coolant.

When the additives such as corrosion inhibitors and thermal stabilizers remain in the coolant stream, the glycol-containing coolant will last longer and will perform better. When glycol is exposed to high temperatures, however, it will degrade. The degradation products include low molecular weight organic acids, which can cause corrosion of the metal surface present in the coolant loop, for example aluminium-copper coolers. The metals that are the products of corrosion catalyze the degradation of glycol in the coolant, thus increasing the thermal degradation rate of the glycol and the formation of conductive organic acids that enhance the corrosion.

This negative feedback loop may be prevented or decelerated by preserving an optimal level of stabilizers in the coolant. For this reason, stabilized coolants are commercially available, such as for example Glysantin^{™} FC G 20-00/50 inhibited, ready-to-use, low-conductivity glycol coolant by BASF SE of Ludwigshafen, Germany. For a demonstration of the effect of stabilizers, see, for example, Technische Information TI/EVO e for Glysantin^{™} FC G 20-00/50, published by BASF in January, 2016.

Current state of the art ion exchange resins in H/OH form effectively remove these additives from the glycol, however. This phenomenon has been described in Rossiter et al., cited above, for example. In contrast, the mixed bed ion exchange resins described herein surprisingly and advantageously do not remove or remove lower amounts of additives such as corrosion inhibitors and stabilizers from the coolant stream, thus extending the useful life of the coolant and the coolant loop.

Three preferred embodiments of the mixed bed are described below.

Embodiment 1: the mixed bed comprises the entirety of the bed of ion exchange resins. In this embodiment:
- The mixed bed is preferably anion dominated. This can be described thus: the sum of the volume of the strong base anion resins in OH form and HCOs form is equal to or greater than the volume of the strong acid cation resin in H form
- For the anion exchange resins, the proportion of the OH form should be in a range of 33 - 75 vol% of the total volume of anion resins in the mixed bed. This can be described further as: the volume of the strong base anion resin in OH form is greater than 33 % and less than 75% of the sum of the volumes of the strong base anion resin in OH form and the strong base anion resin in HCOs form

Embodiment 2: the bed of ion exchange resins contains a mixed bed section and an unmixed bed section, where the unmixed bed section is above the mixed bed section. As used herein, the term "above" refers to an upstream position, and the term "below" refers to a downstream position. The ion exchange filter need not be placed vertically for these terms to apply. For example, in this Embodiment 2, the coolant water that is flowed through the ion exchange filter passes first through the unmixed bed section, which is above the mixed bed section. Complementarily, the mixed bed section is below the unmixed bed section. In this Embodiment 2:
- The mixed bed section is preferably anion dominated. This can be described thus: the sum of the volumes of the strong base anion resins in OH form and HCOs form is equal to or greater than the volume of the strong acid cation resin in H form
- The unmixed bed section is preferably comprised of one or more strong base anion resins in OH form. This resin may be the same as or different from the strong base anion resin in OH form in the mixed bed.
- For the anion exchange resins in the mixed bed section, the proportion of the OH form should be in a range of 33 - 75 vol%. This can be described further as: the volume of the strong base anion resin in OH form is greater than 33 % and less than 75% of the sum of the volumes of the strong base anion resin in OH form and the strong base anion resin in HCOs form
- The volume of the strong base anion resin in OH form in the mixed bed section is greater than 40% of the sum of the volumes of the strong base anion resins in OH form in the unmixed bed section and in the mixed bed section

Embodiment 3: the bed of ion exchange resins contains a mixed bed section and an unmixed bed section, where the unmixed bed section is below the mixed bed section. In this embodiment:
The mixed bed section is preferably anion dominated. This can be described thus: For a given volume of the mixed bed resin, the sum of the volumes of the strong base anion resins in OH and HCOs form is greater than or equal to the volume the strong acid cation resin in H form
- The unmixed bed section is preferably comprised of one or more strong base anion resins in OH form. This resin may be the same as or different from the strong base anion resin in OH form in the mixed bed.
- For the anion exchange resins in the mixed bed section, the proportion of the OH form should be in a range of 33 - 75 vol%. This can be described further as: the volume of the strong base anion resin in OH form is greater than 33 % and less than 75% of the sum of the volumes of the strong base anion resin in OH form and the strong base anion resin in HCOs form
- The volume of the strong base anion resin in OH form in the mixed bed section is greater than 60% of the sum of the volumes of the strong base anion resins in OH form in the unmixed bed section and in the mixed bed section

The following examples are provided to describe the invention in further detail. These examples, which set forth specific embodiments and a preferred mode presently contemplated for carrying out the invention, are intended to illustrate and not to limit the invention.

### EXAMPLES

The ion exchange resins used in these Examples are commercially available, for example from DuPont.

Experiment Set 1: Contaminant removal using a fully mixed bed: strong acid cation (SAC) (H form), strong base anion (SBA) (OH and HCOs forms)
- Experiments were performed in a glass column with 2 cm inner diameter, containing a total resin volume of 50 ml. A 380 ppm solution of mono glycolic acid (MGA) in water (a known contaminant in fuel cell coolant cycle loops) was prepared.

The proportions of the resins in the mixed bed were varied as described in Table 1.

The mixed bed was rinsed with 5BV ultrapure water having a resistivity > 17 Mohm before use. The MGA solution was injected at a flowrate of 1000 mL/hr (corresponding to 20 Bed Volumes (BV) per hour) at the top of the mixed bed. The injection continued until the resin capacity was exhausted. Exhaustion was defined by a conductivity threshold of 5 µS/cm (after ~ 150 Bed Volumes). The first 3 bed volumes were discarded.

The results of the experiments are shown in Table 1. The Average Weighted Conductivity is calculated out of the sum of conductivity per x BV / total of BV treated until endpoint (5 µS/cm). Conductivity at 10 BV was considered to be the starting conductivity. It is shown that, when % OH form in the Mixed Bed is between 33 and 75 vol%, the Average Weighted Conductivity remains low. Increasing the vol% OH form in the Mixed Bed above 75 vol% did not further decrease the Average Weighted Conductivity but could decrease thermal stability.

**Table 1: Resin combinations used to treat MGA stream (fully mixed bed)**

| **Test #** | **1** | **2** | **3** | **4** | **5** | **6** | **7** | **8** | **9** | **10** | **11** |
|---|---|---|---|---|---|---|---|---|---|---|---|
| SAC H form volume (ml) | 7.6 | 7.6 | 7.6 | 7.6 | 7.6 | 7.6 | 7.6 | 7.6 | 7.6 | 7.6 | 7.6 |
| SBA OH form volume (ml) | 0 | 0.9 | 1.7 | 3.4 | 6.8 | 13.6 | 21.2 | 28.8 | 31.8 | 36.04 | 42.4 |
| SBA HCO₃ form volume (ml) | 42.4 | 41.5 | 40.7 | 39 | 35. 6 | 28.8 | 21.2 | 13.6 | 10.6 | 6.36 | 0 |
| V MB | 50 | 50 | 50 | 50 | 50 | 50 | 50 | 50 | 50 | 50 | 50 |
| vol% OH form in the Mixed Bed | 0 (= 100 % HCO 3) | 2 | 4 | 8 | 16 | 33 | 50 | 68 | 75 | 85 | 100 (= 0% HCO 3) |

| **Experiment Set 1 Results (Contaminant Removal Testing)** | | | | | | | | | | | |
|---|---|---|---|---|---|---|---|---|---|---|---|
| Conductivity at 10 BV (µS/cm) | 4.36 | 4.09 | 3.99 | 0.7 | 0.5 8 | **0.45** | **0.33** | **0.33** | **0.49** | 0.27 | 0.25 |
| Average Weighted Conductivity (µS/cm) | 4.95 | 4.52 | 4.38 | 3.77 | 3.6 0 | 2.87 | 1.87 | 1.58 | 1.39 | 1.39 | 1.73 |

Experiment Set 2: Thermal stability of resins in the mixed bed: SAC (H form), SBA (OH and HCOs forms) The Thermal capacity loss is an expression for the reduction of active sites relative to the sites originally present on that resin at T=0 hrs. The thermal capacity loss is calculated as the ratio of the number of active sites in a thermally aged resin to the ratio of active sites in the resin prior to thermal aging, and its value is reported as a percentage. 200 mL of mixed resin beds, with different amounts of OH and HCOs resins, were put in a closed glass beaker and placed in a furnace at 90 °C for 500 hours. They were later tested to evaluate their ion exchange capacity. The results are shown in Table 2. Thermal Capacity Loss accelerated when Volume % OH form exceeded 75 vol%.

**Table 2: Thermal stability testing results**

| | **Thermal Capacity Loss (%)** | | | | |
|---|---|---|---|---|---|
| Volume % OH form | Test 1 (55) | Test 2 (68) | Test 3 (75) | Test 4 (85) | Test 5 (100) |
| 0 hrs | 0 | 0 | 0 | 0 | 0 |
| 500 hrs | 16 | 17 | 17 | 22 | 31 |

Experiment Set 3: Contaminant removal using a partially mixed bed with unmixed OH resins on top: SAC (H form), SBA (OH and HCOs forms)
- Experiments were performed in a glass column with 2 cm inner diameter, containing a total resin volume of 50 ml. A 380 ppm solution of mono glycolic acid (MGA) in water (a known contaminant in fuel cell coolant cycle loops) was prepared.

The proportions of the resins in the mixed bed were varied as described in Table 3. The partially mixed bed was rinsed with 5 BV ultrapure water with a resistivity of >17 Mohm before use. The MGA solution was injected at a flowrate of 1000 mL/hr (corresponding to 20 Bed Volumes per hour) at the top of the partially mixed bed. The injection continued until the resin capacity was exhausted. Exhaustion was defined by a conductivity threshold of 5 µS/cm (after ~ 150 Bed Volumes). The first 3 bed volumes were discarded.

The results are shown in Table 3. Performance is measured in terms of the number of bed volumes treated before the 5 µS/cm endpoint is reached. The results indicate that at most 60 vol% of the OH form can remain unmixed (or at least 40 vol% of the OH form needs to be mixed) before a drop in performance is observed.

Experiment Set 4: Contaminant removal using a partially mixed bed with unmixed OH resins at the bottom - SAC (H form), SBA (OH and HCOs forms)
- Experiments were performed in a glass column with 2 cm inner diameter, containing a total resin volume of 50 ml. A 380 ppm solution of mono glycolic acid (MGA) in water (a known contaminant in fuel cell coolant cycle loops) was prepared.

The proportions of the resins in the mixed bed were varied as described in Table 4. The partially mixed bed was rinsed with 5BV of ultrapure water having a resistivity of > 17 mOhm before use. The MGA solution was injected at a flowrate of 1000 mL/hr (corresponding to 20 Bed Volumes per hour) at the top of the partially mixed bed. The injection continued until the resin capacity was exhausted. Exhaustion was defined by a conductivity threshold of 5 µS/cm (after ~ 150 Bed Volumes). The first 3 bed volumes were discarded.

**Table 3: Resin combinations used to treat MGA stream (partially mixed bed below unmixed OH resins)**

| **Test #** | **1** | **2** | **3** | **4** | **5** | **6** | **7** | **8** |
|---|---|---|---|---|---|---|---|---|
| Total resin volume (mL) | 50 | | | | | | | |
| IRN99H (Cation Resin) Volume (mL) | 7.5 | | | | | | | |
| IRN99H (Cation Resin) Volume (%) | 15 | | | | | | | |
| Total SBA volume (mL) | 42.5 | | | | | | | |
| Total SBA volume (%) | 85 | | | | | | | |
| SBA OH form volume (mL) | 29.25 | | | | | | | |
| SBA OH form volume (%) | 69 | | | | | | | |
| SBA HCO3 form volume (mL) | 13.25 | | | | | | | |
| SBA HCO3 form volume (%) | 31 | | | | | | | |
| SBA OH form not mixed at top (vol%) | 10 | 20 | 40 | 60 | 70 | 80 | 90 | 100 |
| SBA OH form not mixed at top (mL) | 2.9 | 5.8 | 11 7 | 175 | 2048 | 23.40 | 26 33 | 29 25 |
| SBA HCO3 form mixed volume (mL) | 1325 | 1325 | 1325 | 1325 | 1325 | 1325 | 1325 | 1325 |
| SBA OH form mixed volume (mL) | 2635 | 2345 | 17.55 | 11.75 | 8.78 | 585 | 293 | 0 |

| **Results** | | | | | | | | |
|---|---|---|---|---|---|---|---|---|
| Bed volumes treated before reaching 5 µS/cm endpoint (BV) | 148 | 147 | 147 | 149 | 137 | 126 | 117 | 109 |

**Table 4: Resin combinations used to treat MGA stream (partially mixed bed above unmixed OH resins)**

| **Test #** | **1** | **2** | **3** | **4** | **5** |
|---|---|---|---|---|---|
| Total resin volume (mL) | 50 | | | | |
| IRN99H (Cation Resin) Volume (mL) | 7.5 | | | | |
| IRN99H (Cation Resin) Volume (%) | 15 | | | | |
| Total SBA volume (mL) | 42.5 | | | | |
| Total SBA volume (%) | 85 | | | | |
| SBA OH form volume (mL) | 29.25 | | | | |
| SBA OH form volume (%) | 69 | | | | |
| SBA HCO3 form volume (mL) | 13.25 | | | | |
| SBA HCO3 form volume (%) | 31 | | | | |
| SBA OH form not mixed at the bottom (vol%) | 10 | 20 | 40 | 60 | 100 |
| SBA OH form not mixed at the bottom (mL) | 2.9 | 5.8 | 11.7 | 175 | 2925 |
| SBA HCO3 form mixed volume (mL) | 1325 | 13.25 | 1325 | 1325 | 1325 |
| SBA OH form mixed volume (mL) | 2635 | 23.45 | 17 55 | 11 75 | 0 |
| Bed volumes treated before reaching 5 µS/cm endpoint (BV) | 137 | 140 | 138 | 122 | 123 |

The results are shown in Table 4. Performance is measured in terms of the number of bed volumes treated before the 5 µS/cm endpoint is reached. The results indicate that at most 40 vol% of the OH form can remain unmixed in this configuration (or at least 60 vol% of the OH form needs to be mixed) before a drop in performance is observed.

The results indicate that there is an optimum range of the relative volumes of the HCOs and OH form anion resins to combine high thermal stability and good performance (as measured by Thermal Capacity Loss and Average Weighted Conductivity). There is also an optimal volume percentage range of mixing for OH resins to maintain good performance, which surprisingly depends on where the separated resin is accumulated.

Experiment Set 5: Contaminant removal using a mixed bed: SAC (H form), weak base anion (WBA) in free base form
- This experiment set was performed to provide a comparative example. Experiments were performed in a glass column with 2 cm inner diameter, containing a total resin volume of 400 ml. A glycol water mixture comprising 50% ethylene glycol and 50% DI water was prepared. Then 0.1 equivalents per liter of hydroxy glycolic acid (HGA) in water (a known contaminant in fuel cell coolant cycle loops) was dosed.

The proportion of the resins in the mixed bed was 50% SAC, 50% WBA by volume.

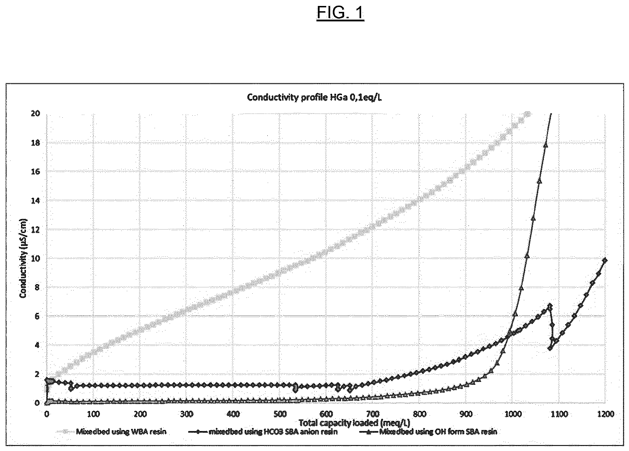

The mixed bed was rinsed with 5 BV of ultrapure water, having a resistivity of >17 MOhmm before use. The glycol water solution was injected at a flowrate of 600 Bed Volumes per hour) at the top of the mixed bed. The injection continued until the resin capacity was exhausted. Exhaustion was defined by a conductivity threshold of 5 µS/cm (after ~ 150 Bed Volumes). The first 3 bed volumes were discarded. The results of the experiment are shown in Figure 1.

The data in Figure 1 demonstrate that the mixed bed containing the WBA shows significant reduction of capability to remove organic acids compared to OH form and HCOs form SBA resins. Conductivity of the stream exiting the mixed bed that contains WBA begins rising immediately after startup. This indicates the limited benefit of using a WBA resin.

Advantageously, the mixed resin beds of the invention do not remove additives such as corrosion inhibitors and stabilizers from the coolant stream. In contrast, a strong acid cation/strong base anion (H/OH) mixed bed of the prior art removes the additives entirely or substantially entirely.

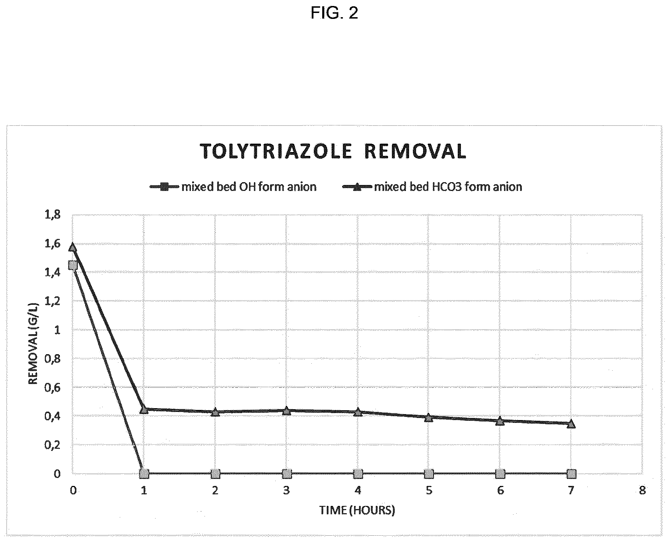

In particular, the results depicted in Figure 2 demonstrate that a mixed bed of ion exchange resins as described herein removes impurities from aqueous streams, but does not remove stabilizers or reduce their concentration below operative levels after 7h or more of operation under the following conditions:
- resin volume = 50mL MB
- test hydraulics = in loop circulation with 1L of Triazole (concentration 1.5g/L) to 20BV/h (feed under agitation), hourly sampling for HPLC analysis
- analyze on HPLC: samples diluted to one tenth / standard range with a tolytriazole solution 1g/L and ethylene glycol solution 1/20, at different concentrations (0 - 25 - 50- 100 - 200 - 300ppm)

While certain of the preferred embodiments of this invention have been described and specifically exemplified above, it is not intended that the invention be limited to such embodiments. Various modifications may be made without departing from the scope and spirit of the invention, as set forth in the following claims.

## Claims

1. An apparatus for treating a liquid stream in an electrochemical system, wherein said electrochemical system is a fuel cell or battery or a battery charger, said apparatus comprising a mixed bed of ion exchange resins, and said ion exchange resins comprising:
a) a strong acid cation resin in H form;
b) a strong base anion resin in OH form; and
c) a strong base anion resin in HCOs form;
wherein, for a given volume of the mixed bed resin, the sum of the volumes of the strong base anion resins in OH and HCOs form is greater than or equal to the volume of the strong acid cation resin in H form; and
wherein said apparatus optionally further comprises an unmixed bed of ion exchange resin, said unmixed bed comprising a strong base anion resin in OH form.

2. The apparatus of Claim 1, wherein the mixed bed, the unmixed bed, or both the unmixed bed and the mixed bed are **characterized by** one or more of the following conditions:
a) in the mixed bed the volume of the strong base anion resin in OH form is greater than 33 % of the sum of the volume of the strong base anion resin in OH form and the volume of the strong base anion resin in HCOs form; or
b) the volume of the strong base anion resin in OH form is less than 75 % of the sum of the volume of the strong base anion resin in OH form and the volume of the strong base anion resin in HCOs form; or
c) the combined volume of the strong base anion resins in OH form and HCOs form in the mixed bed and in the unmixed bed is equal to or greater than the volume of the strong acid cation resin in H form; or
d) the volume of the strong base anion resin in OH form in the mixed bed and in the unmixed bed is greater than 33 % of the sum of the volume of the strong base anion resin in OH form and the volume of the strong base anion resin in HCOs form in the mixed bed and in the unmixed bed; or
e) the sum of the volumes of the strong base anion resin in OH form in the mixed bed and in the unmixed bed is less than 75 % of the combined volumes of the strong base anion resin in OH form and the strong base anion resin in HCOs form in the mixed bed and in the unmixed bed; or
f) the volume of the strong base anion resin in OH form in the mixed bed section is greater than 40% of the sum of the volume of the strong base anion resin in OH form in the unmixed bed section and in the mixed bed section; or
g) the volume of the strong base anion resin in OH form in the mixed bed section is greater than 60% of the sum of the volumes of the strong base anion resin in OH form in the unmixed bed section and in the mixed bed section.

3. The apparatus according claim 1 or claim 2, wherein said liquid stream comprises a mixture of glycol and water, and wherein said glycol comprises ethylene glycol, propylene glycol, or a combination of ethylene glycol and propylene glycol, and optionally one or more additives selected from thermal stabilizers, antifoam agents, and corrosion inhibitors.

4. The apparatus according to any preceding claim that comprises a coolant loop, and wherein said liquid stream is a coolant in the coolant loop.

5. The apparatus of any preceding claim wherein the unmixed bed section is above the mixed bed section.

6. The apparatus of any preceding claim wherein the unmixed bed section is below the mixed bed section.

7. An apparatus for treating a liquid stream in an electrolyzer, said apparatus comprising a mixed bed of ion exchange resins, said mixed bed comprising:
a strong acid cation resin in H form; and
a strong base anion resin in OH form; and optionally
a strong base anion resin in HCOs form; and
wherein said liquid stream comprises water and at least one dissolved impurity selected from the group consisting of an anion rich mixture of materials classified as total organic carbon, one or more organic acids, and one or more ions selected from the group consisting of boron, silica, manganese, nickel, zinc, sodium, potassium, fluoride, chloride, bromide, nitrate, phosphate, and sulfate ions.

8. The apparatus of claim 7 that comprises a coolant loop, wherein said liquid stream is a coolant in the coolant loop.

9. The apparatus of claim 7 or claim 8, wherein the volume of the strong base anion resin in OH form is equal to or greater than 3 times or preferably equal to or greater than 6 times the volume of the strong acid cation resin in H form.

10. A process for treating a liquid stream in an electrochemical system, wherein said electrochemical system is a fuel cell or battery, said process comprising the steps of:
providing an apparatus comprising a mixed bed of ion exchange resins, and said ion exchange resins comprising:
a) a strong acid cation resin in H form;
b) a strong base anion resin in OH form; and
c) a strong base anion resin in HCOs form;
wherein the combined volume of the strong base anion resins in OH form and HCOs form is equal to or greater than the volume of the strong acid cation resin in H form; and
contacting the liquid stream with the mixed bed of ion exchange resins.

11. A process for treating a liquid stream in an electrolyzer, said apparatus comprising a mixed bed of ion exchange resins, said process comprising the steps of:
providing a mixed bed comprising:
a strong acid cation resin in H form;
a strong base anion resin in OH form; and optionally
a strong base anion resin in HCOs form; and
contacting the liquid stream with the ion exchange resins;
wherein said liquid stream comprises water and at least one dissolved impurity selected from the group consisting of an anion rich mixture of materials classified as total organic carbon, one or more organic acids, and one or more ions selected from the group consisting of boron, silica, manganese, nickel, zinc, sodium, potassium, fluoride, chloride, bromide, nitrate, phosphate, and sulfate ions.
